(19) Europäisches Patentamt
European Patent Office
Office européen des brevets

(11) Publication number: **0 405 534 B1**

(12) # EUROPEAN PATENT SPECIFICATION

(45) Date of publication of patent specification: **24.08.94**

(51) Int. Cl.[5]: **C08G 18/50**, C04B 41/48

(21) Application number: **90112313.3**

(22) Date of filing: **27.06.90**

(54) **The use of fluorinated polyurethanes with hydroxy functionality for the treatment of lithoidal material.**

(30) Priority: **28.06.89 IT 2101889**

(43) Date of publication of application:
**02.01.91 Bulletin 91/01**

(45) Publication of the grant of the patent:
**24.08.94 Bulletin 94/34**

(84) Designated Contracting States:
**AT BE CH DE DK ES FR GB GR LI NL SE**

(56) References cited:
**EP-A- 0 235 380**
**US-A- 3 642 705**
**US-A- 3 972 856**

(73) Proprietor: **SYREMONT S.p.A.**
**31 Foro Buonaparte**
**I-20121 Milan (IT)**

(72) Inventor: **Cozzi, Ennio**
**5, Via Montale**
**I-20020 Cantalupo (IT)**
Inventor: **Federici, Franco**
**49, V. le Stelvio**
**I-21052 Busto Arsizio, Verese (IT)**
Inventor: **Parrini, Paolo**
**33, V.le Volta**
**I-28100 Novara (IT)**

(74) Representative: **Weinhold, Peter, Dr. et al**
**Patentanwälte Dipl.-Ing. G. Dannenberg**
**Dr. P. Weinhold**
**Dr. D. Gudel**
**Dipl.-Ing. S. Schubert**
**Dr. P. Barz**
**Siegfriedstrasse 8**
**D-80803 München (DE)**

EP 0 405 534 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to the use of fluorinated polyurethanes with hydroxy functionality as protective agents in the treatment of lithoidal materials.

More particular, the present invention relates to the use of fluorinated polyurethanes with hydroxy functionality as protective agents endowed with high light resistance and impermeability to water.

Still more specifically, the present invention is concerned with the use of fluorinated polyurethanes with hydroxy functionality as protective agents showing a strong waterproofing action, i.e., a protective effect against the aggressive action of moisture and water, as well as of the salts dissolved in said water, while the permeability to gases and vapours of the lithoidal materials subjected to a treatment with said agents remains unchanged.

The inventive use of these polyurethanes makes it possible to achieve a protective effect, which remains unchanged over very long periods of time, even if the treated material is exposed to severe environmental conditions of decay and ageing.

It is well-known that many materials show a tendency to decay over time and to become, e.g., extremely porous and incoherent, before being completely destroyed, owing to the action of environmental chemical factors, or due to - also natural - dacay or ageing. Typical examples of materials which undergo such a decay are all kinds and types of stones, such as bricks, marbles, building materials, etc.

The problem of preserving these materials is of basic importance in those cases in which one wishes to preserve the concerned good, or building, with its original appearance and a more or less integral replacement thereof is not desired. This problem arises, e.g., in the case of cultural, artistic, historical and archaeological goods, which have to be preserved for as long as possible.

It is well-known that the materials which suffer the most from decay are lithoidal monuments such as churches, palaces, buildings, etc., which, by being in continuous contact with the more or less polluted atmospheres of towns and/or the surrounding environment, are exposed to a continuous attack by chemical agents such as sulfur oxides or nitrogen oxides which, in the presence of atmospheric humidity, exert an action which modifies to a substantial extent the nature of the materials said monuments were built of. This chemical attack, combined with the natural change of temperature, causes changes in colour or the formation of crusts, scales, films, crevices, etc., with a consequent progressive and unarrested decrease in the cohesion of the material and a loss of said material.

In this case, the intervening preservation requires preliminary cleaning and a subsequent protective treatment, the aim of which is to protect the various elements or parts in a way such as to protect the good, or its most meaningful details, such as decorations, reliefs, etc., from the aggressive agents.

In order to obtain such a protection, it is known to coat or impregnate the lithoidal good or material with film forming polymeric substances such as acryl, vinyl and silicone resins, etc., which show good adhesion, satisfactory resistance to atmospheric agents and a fairly good resistance to ageing caused by the action of light or atmospheric agents. The main drawback of these polymeric substances is that they form a surface film which, although very thin, is impervious to air, vapours and other gases. Such an impermeable coating leads to the accumulation of vapours in the material, to the concentration of salts and to a wide range of processes, which even cause evident and irreparable damaging of the treated material. In fact, it is well-known that the "breathing" of a lithoidal material, whether of stone, brick, marble or the like, is of basic importance for a satisfactory and durable preservation thereof.

The purpose of the instant invention is to provide a product used for protecting lithoidal materials which, besides being colourless and showing good adhesion and very good resistance to light, moisture, water and atmospheric agents, does not substantially modify the permeability to gases and vapours, and furthermore shows no film-forming properties, as well as characteristics of reversibility.

It has now been found that polyurethanes with hydroxy functionality, containing (per)fluoropolyether moieties in their chain, are products which show the characteristics specified above.

Such polyurethanes, as well as a process for preparing the same, are already known from EP-A-O235 380.

The instant invention makes use of the said fluorinated polyurethanes with hydroxy functionality, obtainable by reacting at least one organic diisocyanate with at least one hydroxy-capped (per)-fluoropolyether and subsequently reacting the product thus obtained with a polyol having a functionality of at least 2 and in which the ratio of the equivalents of isocyanate groups to total hydroxy groups is lower than, or equal to, 1.

Ratios of NCO equivalents to total OH equivalents of from 0.001 to 1 are preferred.

Any diisocyanates of general formula I:

OCN-$R_1$-NCO (I)

wherein $R_1$ is a (preferably $C_{1-12}$-) alkylene, (preferably $C_{5-8}$-) cycloalkylene, (preferably $C_{6-10}$-) alkylene-cycloalkylene or ($C_{6-12}$-) arylene radical and contains from 1 to 20 carbon atoms, can be used for the preparation of the said fluorinated polyisocyanates.

Examples of suitable polyisocyanates are:
2,4-toluene-diisocyanate, alone or in admixture with its 2,6-toluene-diisocyanate isomer; 4,4'-diphenylmethane-diisocyanate; 4,4'-dicyclohexyl-methane-diisocyanate; 1-isocyanato-3-isocyanato-methyl-3,5,5-trimethyl-cyclohexane (isophorone-diisocyanate); 2,2,4-trimethyl-hexamethylene-diisocyanate in admixture with the 2,4,4-trimethyl-hexamethylene-diisocyanate isomer; ethylidene-diisocyanate; butylene-diisocyanate, pentamethylene-diisocyanate, hexamethylene-diisocyanate, cyclopentylene-1,3-diisocyanate, cyclohexylene-1,4-diisocyanate, cyclohexylene-1,2-diisocyanate, xylylene-diisocyanate, dichloro-hexamethylene-diisocyanate, dicyclohexyl-4,4'-diisocyanate, 1,2-di(isocyanatomethyl-cyclobutane), 1-methyl-2,4-diisocyanato-cyclohexane, 1-methyl-2,6-diisocyanato-cyclohexane, etc.; aliphatic diisocyanates containing ether groups, such as 1,3-bis-(gamma-isocyanato-propoxy)-2,2-dimethyl-propane, etc. Among these, the aliphatic diisocyanates, such as isophorone-diisocyanate, are preferred.

Any polyol having a functionality of at least 2 can be used in the synthesis of the above-mentioned polyurethanes. Polyols with a molecular weight lower than or equal to 500, such as ethylene glycol, propylene glycol, 1,4-butanediol, trimethylol-propane, trimethylol-ethane, glycerol, 1,2,6-hexane-triol, pentaerythritol, neopentyl glycol and hydrogenated bisphenol A, are preferred.

However, high molecular weight polyols, e.g., polyols having a molecular weight higher than 500, such as polyethyleneglycol 1000, polyethyleneglycol 2000, polypropyleneglycol 1000, polypropyleneglycol 2000, polytetramethyleneglycol, polycaprolactone-diol, etc. can be used as well.

Preferably, the hydroxy-capped (per)fluoropolyethers used in the preparation of the said polyurethanes are fluoropolyoxyalkylene ethers having an average molecular weight of from 400 to 7000 and have the general formula(II):

HO-$R_f$-OH (II)

wherein $R_f$ is selected from:

$-R-CF_2-O-(C_2F_4O)_m-(CF_2O)_n-CF_2-R-$

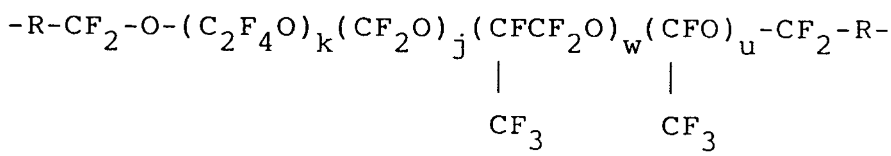

$-R-CF_2-O-(C_3F_6O)_d-CF_2-R-$
$-R-CF_2-(OC_2F_4CH_2)_b-OR'_fO-(CH_2C_2F_4O)_b-CF_2-R-$
$-R-CF_2-O-(C_2F_4O)_r-CF_2-R-$

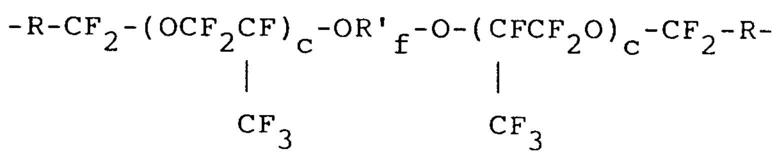

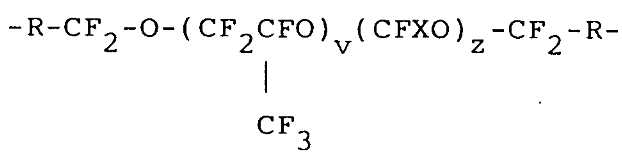

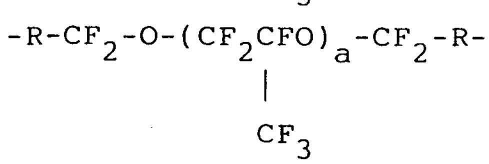

$-R-CF_2-(O-CF_2CF_2CH_2)_g-O-CF_2-R-$

wherein:

| | |
|---|---|
| R | is selected from<br>$-(CH_2)_x-$;<br>$-[(CH_2O)_yCH_2]-$, and<br>$-(CH_2)_x-OCH_2-$,<br>with x and y being integers of from 1 to 4; |
| m and n | are integers with a ratio of m to n of from 0.2 to 2, preferably of from 0.5 to 1.2; |
| $R'_f$ | is a perfluoroalkylene radical; |
| X | is F or $CF_3$; |
| k, j, w, u, d, b, r, c, v, z, a and g | are integers such that the resulting molecular weights are within the range of from 400 to 7000. |

The (per)fluoropolyethers of general formula (II) are products known from the prior art, and can be obtained, e.g., through the processes disclosed in US-A-3,242,218; 3,665,041; 3,715,378 and 4,523,039; and in EP-A-148,482; 151,877; 165,649 and 165650.

The (per)fluoropolyethers are known on the market under the trade marks FOMBLIN(R) and GALDEN(R), manufactured and sold by Montefluos S.p.A.

The polyurethanes used in the present invention preferably have an average molecular weight of at least 1000, particularly of from 2000 to 5000, a hydroxy functionality higher than or equal to 2, particularly of from 2 to 6, and a fluorine content of at least 30% by weight, particularly of from 35 to 50%. Generally they are soluble in most organic solvents, such as, e.g. esters, ketones, glycol ethers and chlorofluorocarbons.

The process for preparing the fluorinated polyurethanes used in the present invention comprises:

(a) reacting the diisocyanate and the hydroxy-capped perfluoropolyether at a temperature of from about 40 to about 100 °C, the ratio of NCO equivalents to OH equivalents being about 2;

(b) reacting the product of step (a) with the polyol having a functionality of at least 2 at a temperature of from about 40 to about 100 °C, the ratio of NCO equivalents employed in step (a) to OH equivalents being smaller than or equal to 0.5, and preferably ranging from 0.25 to 0.5, including the limits.

Alternatively, step (b) can be followed by at least one further double reaction in which the treatment with diisocyanate and then with polyol is carried out under the same conditions as described above.

The reactions of steps (a) and (b) and the optional successive steps preferably are carried out in a solvent inert at the reaction temperature. Examples of such solvents are glycol ethers, such as methoxypropanol, methyl-cellosolve, acetates, such as methyl-cellosolve acetate, methoxypropanol acetate, butoxyethanol acetate, etc., as well as esters, such as ethyl acetate, butyl acetate, etc., N-methylpyrrolidone, etc.

In order to increase the reaction rate, the process preferably is carried out in the presence of suitable catalysts.

Examples of such catalysts are: tertiary amines, such as triethylene diamine, N-ethylethylene-imine, tetramethyl-guanidine, dimethylcyclohexylamine, etc.; organometallic activators, such as dibutyltin dilaurate, thin octanoate, cobalt naphthenate, vanadium acetylacetonate, dimethyltin diethylhexanoate and mixtures thereof.

Triethylene diamine and dibutyltin dilaurate are preferred catalysts.

Said catalysts generally are used in catalytic concentrations, usually in concentrations not higher than 0.1% by weight.

The said fluorinated polyurethanes with hydroxy functionality can be used in the treatment of lithoidal materials as protective agents endowing said lithoidal materials with hydrophobic properties, cohesion, etc. They are preferably used in the form of solutions at a concentration of from 1 to 20% by weight, particularly of from 1 to 5% by weight.

As solvents, the same solvents as used in the preparation or any other diluent solvents compatible with them can be used. Examples of diluent solvents are alcohols, such as ethanol, isopropanol, etc.; glycol ethers; ketones such as acetone, methyl-ethyl-ketone, etc.; chlorofluorocarbons, or mixtures thereof.

The following non-limitative examples are given in order to illustrate the invention.

Example 1

44.46 g of isophorone-diisocyanate (0.2 mol), 200 g of Fomblin(R) Z-DOL 2000 (0.1 mol), 38.6 g of ethyl acetate and 0.066 g of DABCO T12 CL (dibutyltin dilaurate) were placed, under a nitrogen blanketing

atmosphere in a 500 ml reactor equipped with stirring means, thermometer and reflux condenser. The reaction mixture was heated to 55 °C within 20 minutes, then slowly heated up to its reflux temperature, i.e., about 75 °C. The reaction mixture was kept at this temperature until a content of NCO not higher than 3%, based on the total reaction mixture (dry solids = 86.3%) was reached. The reaction mixture thereafter was cooled to 40 °C where-after 18 g of 1,4-butanediol were added thereto. The temperature was again increased to 75 °C within 30 minutes and the reaction mixture was kept at this temperature until the NCO groups had disappeared (about 3 hours). The reaction mixture was cooled and 13.9 g of ethyl acetate were added in order to achieve a final concentration of 80% of dry solids (theoretical).

Example 2

The first part of the process was carried out in the same way as described in example 1 until the specified NCO content was reached. Then the reaction mass was cooled down to 55 °C and 21.3 g of neopentyl glycol (2.05 mol),dissolved in 21 g of ethyl acetate, were added. The temperature was raised up to the reflux temperature, i.e. about 78 °C, within 2.5 hours. The reaction mixture was kept at this temperature until the NCO groups had disappeared (about 1 hour). The temperature was decreased to 60 °C and the reaction mixture was diluted with 20.2 g of ethyl acetate in order to adjust the theoretical dry solids content to 70%.

Example 3

44.46 g of isophorone-diisocyanate (0.2 mol), 200 g of Fomblin$^{(R)}$ Z-DOL 2000 (0.1 mol), 6.1 g of methoxypropanol acetate (80% of dry solids) and 0.06g of DABCO T12 CL were placed in a reactor similar to that used in example 1.

The temperature of the reaction mass was slowly increased to 90 °C, then it was kept at this value until NCO = 2.8% max. was reached (about 1.5 hours).

Then, the temperature was decreased to 70 °C, and 26.8 g of trimethylolpropane (0.3 mol) and 55.1 g of methoxypropanol acetate (70% of solids) were added. The temperature was increased again to 90 °C and was maintained at this value until the NCO groups had disappeared (about 2.5 hours).

19.5 g of ethyl acetate were then added in order to adjust the theoretical final dry solids content to 50%.

Example 4

The process was carried out with an equipment similar to that used in example 1, and the same amounts of isophorone-diisocyanate, Fomblin$^{(R)}$ Z-DOL 2000 and DABCO T12 CL, as well as 27.1 g of ethyl acetate (90% of dry solids) were employed. The reaction mixture was slowly heated up to its reflux temperature, i.e., about 80 °C, and was kept at this value until a content of NCO = 2.6% max., based on the total reaction mixture, was reached.

Thereafter, with the temperature being still kept at 80 °C, 49.2 g of hydrogenated bisphenol A (2.05 mols), dissolved in 50 g of methoxypropanol acetate, were added. Then the reaction mixture was kept at 80 °C until the NCO groups had disappeared (about 4 hours). 48.7 g of methoxypropanol acetate were added and the reaction mixture was cooled. Theoretical value of final dry solids content: 70%.

Example 5

The process was carried out in the same way as described in example 1, except that ethyl acetate was replaced by methoxypropanol acetate and that the reaction temperature was 90 °C instead of 75 °C. When the reaction was complete and the dry solids content of the reaction product had been adjusted to 80%, the reaction product, instead of being cooled and discharged, was further processed as follows: A further 44.46 g of isophorone-diisocyanate (0.2 mol) were added, the temperature was increased to 90 °C and was maintained at that value until NCO = 2.3% max, based on the total reaction mixture, was reached (about 45 minutes). 26.8 g of trimethylolpropane (0.3 mol) and 81.3 g of methoxypropanol acetate (70% of solids) were then added. The temperature was again increased to 90 °C and kept at this value until the NCO groups had totally disappeared (about 3 hours). The temperature of the reaction mass was decreased to 70 °C and 79.5 g of methoxypropanol acetate were added in order to adjust the final value of the theoretical dry solids content to 60%.

The physical and chemical characteristics of the products obtained in examples 1 to 5 are reported in Table 1.

Table 1

| Characteristics | Example 1 | Example 2 | Example 3 | Example 4 | Example 5 |
|---|---|---|---|---|---|
| Physical appearance | * | * | * | * | * |
| Measured dry residue, % | 80 | 69.10 | 50 | 69.7 | 60 |
| Viscosity, mPa.s at 23°C | 2400 | 250 | 400 | 7500 | 5000 |
| Hydroxy functionality | 2 | 2 | 4 | 2 | 4 |
| Solvent | AE | AE | PMA/NMP 2 : 3 | PMA/AE 4 : 1 | PMA |
| Resistance to U.V. C (wavelength 253 nm) △E after 400 hours of exposure (ASTM D 2244-79 range B2) | 0.4 | 0.4 | 0.3 | 0.8 | 0.4 |
| Contact angle (Aticelca MC 21-72) | 104° | 108° | 107° | 105° | 106° |
| Softening point of dry polyurethane | <30°C | 50°C | <30°C | 130°C | 55-60°C |
| Average molecular weight of dry polyurethane | 2600 | 2600 | 2700 | 2900 | 3250 |
| Fluorine % content, as measured on dry polyurethane | 50 | 50 | 48 | 44 | 40 |

* = slightly cloudy liquid

PMA = methoxypropanol acetate

NMP = N-methyl-pyrrolidone

AE = ethyl acetate

Example 6

The solution of example 1 was diluted with DELIFRENE(R) AC (Montefluos S.p.A.) to a content of 1.5% by weight of dry solids. This solution was applied by means of a brush onto two groups of specimen of sandstone (5 x 5 x 2 cm), whose water absorption had been tested by using pipettes for a total time of 30 minutes, so as to obtain a deposit of 30 and 41 g/$m^2$ of dry polyurethane, respectively, on each specimen of said groups.

Subsequently, the absorption of water by the treated specimen was measured by means of the same method, and the protective efficiency of the treatment was determined. The obtained results are reported in Table 2.

Example 7

The test was carried out in the same way as described in example 6, using specimen of "Lecce" stone and the formulation of example 4. The deposits on the specimen of the two test groups were 50 and 96 g/$m^2$, respectively. The results are reported in Table 2.

Example 8

The solution of example 5, diluted with DELIFRENE(R) AC to 14% by weight was applied (by dipping) to a specimen of plaster of 1 cm of average thickness and with a surface-area of 1 $dm^2$. The permeability to water vapour was measured (according to ASTM E 96) before and after the treatment. The results were11.6 g/$hm^2$ and 7.9 g/$hm^2$, respectively.

Table 2

| | Deposit g/$m^2$ | Protective efficiency % (*) |
|---|---|---|
| Example 6: | | |
| * 1st Group | 30 | 74 |
| * 2nd Group | 41 | 99 |
| Example 7: | | |
| * 1st Group | 50 | 93 |
| * 2nd Group | 96 | 100 |

(*) The protective efficiency is expressed as the percent ratio of the difference in water absorption before and after the protective treatment, to the value of water absorption before said treatment.

**Claims**

**Claims for the following Contracting States : AT, BE, CH, DE, DK, FR, GB, GR, LI, NL, SE**

**1.** Use of fluorinated polyurethanes with hydroxy functionality, obtainable by reacting at least one organic diisocyanate with at least one hydroxy-capped (per)fluoropolyether and further reacting the resulting product with a polyol having a functionality of at least 2, and wherein the ratio of equivalents of isocyanate groups to total hydroxy groups is not higher than 1,
as protective agents in the treatment of lithoidal materials.

**2.** The use of fluorinated polyurethanes with hydroxy functionality according to claim 1, wherein the ratio of NCO equivalents to total OH equivalents ranges from 0.001 to 1.

**3.** The use of fluorinated polyurethanes with hydroxy functionality according to any one of claims 1 and 2, wherein the diisocyanate is selected from compounds of general formula (I):

$OCN\text{-}R_1\text{-}NCO$ (I)

wherein $R_1$ is a alkylene, cycloalkylene, alkylene-cycloalkylene or arylene group and contains from 1 to 20 carbon atoms.

**4.** The use of fluorinated polyurethanes with hydroxy functionality according to any one of the preceding claims, wherein the hydroxy-capped (per)fluoropolyethers are fluoropolyoxyalkylene ethers having an average molecular weight of from 400 to 7000 and have the general formula (II):

$HO-R_f-OH$ (II)

wherein $R_f$ is selected from

$-R-CF_2-O-(C_2F_4O)_m(CF_2O)_n-CF_2-R-$

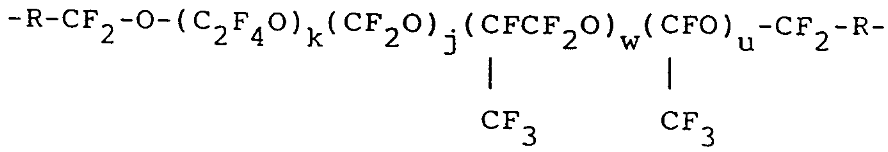

$-R-CF_2-O-(C_3F_6O)_d-CF_2-R-$
$-R-CF_2-(OC_2F_4CH_2)_b-OR'_fO-(CH_2C_2F_4O)_b-CF_2-R-$
$-R-CF_2-O-(C_2F_4O)_r-CF_2-R-$

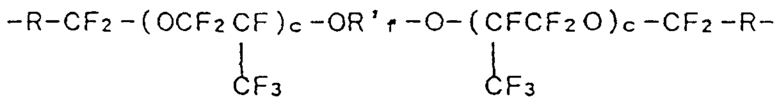

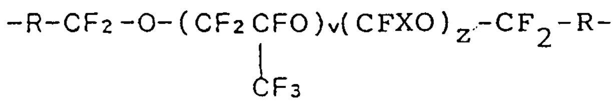

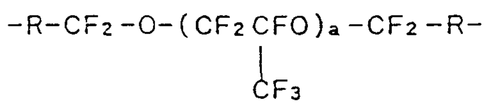

$-R-CF_2-(O-CF_2CF_2CH_2)_g-O-CF_2-R-$

wherein:

| | |
|---|---|
| R | is selected from<br>$-(CH_2)_x-$;<br>$-[(CH_2O)_yCH_2]-$, and<br>$-(CH_2)_x-OCH_2-$,<br>with x and y being integers of from 1 to 4; |
| m and n | are integers with a ratio m/n of from 0.2 to 2, preferably from 0.5 to 1.2; |
| $R'_f$ | is a perfluoroalkylene radical; |
| X | is F or $CF_3$ ; |
| k, j, w, u, d, b, r, c, v, z, a and g | are integers such that the resulting molecular weights are within the indicated range. |

**5.** The use of fluorinated polyurethanes with hydroxy functionality according to any one of the preceding claims, the said fluorinated polyurethanes having an average molecular weight of at least 1000, preferably from 2000 to 5000, a hydroxy functionality of at least 2, preferably from 2 to 6, and a fluorine content of at least 30% by weight, preferably of from 35 to 50% by weight.

**6.** The use of fluorinated polyurethanes with hydroxy functionality according to any one of the preceding claims, wherein the polyurethanes are used in dissolved form at a concentration of from 1 to 20% by

weight, preferably 1 to 5% by weight.

**Claims for the following Contracting State : ES**

1. A process for the protection of lithoidal materials, characterized in that these materials are treated with solutions of fluorinated polyurethanes with hydroxy functionality, obtained by reacting at least one organic diisocyanate with at least one hydroxy-capped (per)fluoropolyether and by further reacting the resulting product with a polyol having a functionality of at least 2, and wherein the ratio of equivalents of isocyanate groups to total hydroxy groups is not higher than 1.

2. The process according to claim 1, characterized in that the solutions of fluorinated polyurethanes with hydroxy functionality have concentrations of from 1 to 20% by weight, preferably of from 1 to 5% by weight.

3. The process according to any one of the preceding claims, characterized in that in the fluorinated polyurethanes with hydroxy functionality the ratio of NCO equivalents to total OH equivalents ranges from 0.001 to 1.

4. The process according to any one of the preceding claims, characterized in that the diisocyanate is selected from compounds of general formula (I):

   $OCN-R_1-NCO$ (I)

   wherein $R_1$ is an alkylene, cycloalkylene, alkylene-cycloalkylene or arylene group and contains from 1 to 20 carbon atoms.

5. The process according to any one of the preceding claims, characterized in that the hydroxy-capped (per)fluoropolyethers are fluoropolyoxyalkylene ethers having an average molecular weight of from 400 to 7000 and have the general formula (II):

   $HO-R_f-OH$ (II)

   wherein $R_f$ is selected from

   $-R-CF_2-O-(C_2F_4O)_m(CF_2O)_n-CF_2-R-$

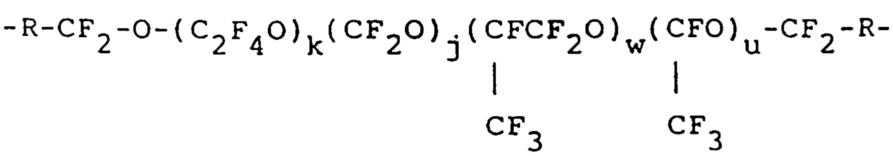

   $-R-CF_2-O-(C_3F_6O)_d-CF_2-R-$
   $-R-CF_2-(OC_2F_4CH_2)_b-OR'_fO-(CH_2C_2F_4O)_b-CF_2-R-$
   $-R-CF_2-O-(C_2F_4O)_r-CF_2-R-$

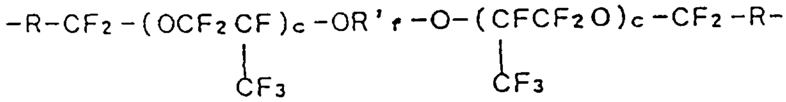

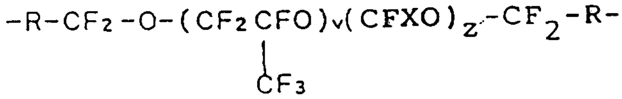

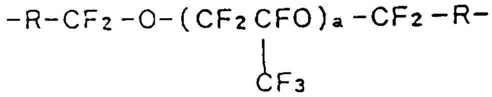

$-R-CF_2-(O-CF_2CF_2CH_2)_g-O-CF_2-R-$

wherein:

| | |
|---|---|
| R | is selected from $-(CH_2)_x-$; $-[(CH_2O)_yCH_2]-$, and $-(CH_2)_x-OCH_2-$, with x and y being integers of from 1 to 4; |
| m and n | are integers with a ratio m/n of from 0.2 to 2, preferably from 0.5 to 1.2; |
| $R'_f$ | is a perfluoroalkylene radical; |
| X | is F or $CF_3$; |
| k, j, w, u, d, b, r, c, v, z, a and g | are integers such that the resulting molecular weights are within the indicated range. |

6. The process according to any one of the preceding claims, characterized in that the fluorinated polyurethanes have an average molecular weight of at least 1000, preferably from 2000 to 5000, a hydroxy functionality of at least 2, preferably from 2 to 6, and a fluorine content of at least 30% by weight, preferably of from 35 to 50% by weight.

**Patentansprüche**
**Patentansprüche für folgende Vertragsstaaten : AT, BE, CH, DE, DK, FR, GB, GR, LI, NL, SE**

1. Verwendung von fluorierten Polyurethanen mit Hydroxy-Funktionalität, erhältlich durch Umsetzung wenigstens eines organischen Diisocyanats mit wenigstens einem (Per)fluorpolyether mit Hydroxyendgruppe(n) und weiterer Umsetzung des entstehenden Produkts mit einem Polyol mit einer Funktionalität von wenistens 2, und wobei das Äquivalentverhältnis der Isocyanatgruppen zu den gesamten Hydroxygruppen nicht höher als 1 ist,
als Schutzmittel bei der Behandlung von steinartigen Materialien.

2. Verwendung der fluorierten Polyurethane mit Hydroxy-Funktionalität nach Anspruch 1, wobei das Verhältnis von NCO-Äquivalenten Zu den gesamten OH-Äquivalenten von 0,001 bis 1 beträgt.

3. Verwendung der fluorieren Polyurethane mit Hydroxy-Funktionalität nach einer der Ansprüche 1 oder 2, wobei das Diisocyanat ausgewählt wird aus Verbindungen mit der allgemeinen Formel (I):

$OCN-R_1-NCO$ (I)

worin $R_1$ eine Alkylen-, Cycloalkylen-, Alkylen-cycloalkylen- oder Arylengruppe mit 1 bis 20 Kohlenstoffatomen bedeutet.

4. Verwendung der fluorierten Polyurethane mit Hydroxy-Funktionalität nach einem der vorhergehenden Ansprüche, worin die (Per)fluorpolyether mit Hydroxyendgruppen Fluorpolyoxyalkylenether mit einem durchschnittlichen Molekulargewicht von 400 bis 7000 sind mit der allgemeinen Formel (II):

$HO-R_f-OH$ (II)

worin $R_f$ ausgewählt wird aus

$-R-CF_2-O-(C_2F_4O)_m(CF_2O)_n-CF_2-R-$

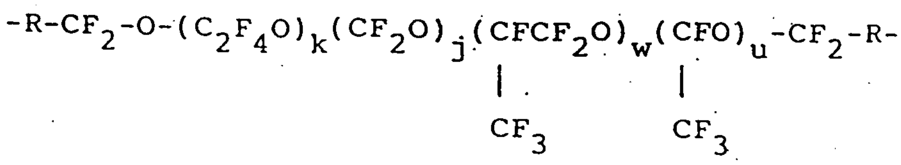

$-R-CF_2-O-(C_3F_6O)_d-CF_2-R-$

$-R-CF_2-(OC_2F_4CH_2)_b-OR'_fO-(CH_2C_2F_4O)_b-CF_2-R-$
$-R-CF_2-O-(C_2F_4O)_r-CF_2-R-$

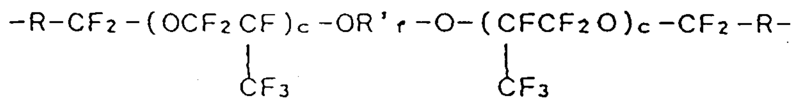

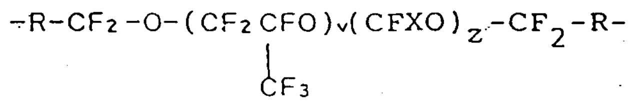

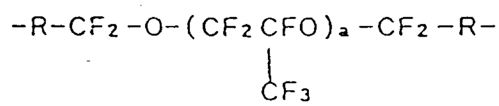

$-R-CF_2-(O-CF_2CF_2CH_2)_g-O-CF_2-R-$

worin:

R ausgewählt wird aus
$-(CH_2)_x-$;
$-[(CH_2O)_yCH_2]-$, und
$-(CH_2)_x-OCH_2-$,

wobei

| | |
|---|---|
| x und y | ganze Zahlen von 1 bis 4 sind; |
| m und n | ganze Zahlen mit einem Verhältnis von m/n von 0,2 bis 2, vorzugsweise von 0,5 bis 1,2 sind; |
| $R'_f$ | ein Perfluoralkylen-Radikal ist; |
| X | F oder $CF_3$ ist; |
| k, j, w, u, d, b, r, c, v, z, a und g | solche ganze Zahlen bedeuten, daß die Molekulargewichte innerhalb des angegebenen Bereichs liegen. |

**5.** Verwendung der fluorierten Polyurethane mit Hydroxy-Funktionalität nach einem der vorhergehenden Ansprüche, wobei die genannten fluorierten Polyurethane ein durchschnittliches Molekulargewicht von wenigsten 1000, vorzugsweise von 2000 bis 5000, eine Hydroxy-Funktionalität von wenigstens 2, vorzugsweise von 2 bis 6, und einen Fluorgehalt von wenigstens 30 Gew.-%, vorzugsweise von 35 bis 50 Gew.-%, aufweisen.

**6.** Verwendung der fluorierten Polyurethane mit Hydroxy-Funktionalität nach einem der vorhergehenden Ansprüche, worin die Polyurethane in gelöster Form in einer Konzentration von 1 bis 20 Gew.-%, vorzugsweise 1 bis 5 Gew.-%, verwendet werden.

**Patentansprüche für folgenden Vertragsstaat : ES**

**1.** Verfahren zum Schutz von steinartigen Materialien, dadurch gekennzeichnet, daß diese Materialien mit Lösungen von fluorierten Polyurethanen mit Hydroxy-Funktionalität, erhalten durch Umsetzung wenigstens eines organischen Diisocyanats mit wenigstens einem (Per)fluorpolyether mit Hydroxyendgruppe-(n) und weiterer Umsetzung des entstehenden Produkts mit einem Polyol mit einer Funktionalität von wenigstens 2, und wobei das Äquivalentverhältnis der Isocyanatgruppen zu den gesamten Hydroxygruppen nicht höher als 1 ist, behandelt werden.

**2.** Verfahren nach Anspruch 1, dadurch gekennzeichnet, daß die Lösungen der fluorierten Polyurethane mit Hydroxy-Funktionalität eine Konzentration von 1 bs 20 Gew.-%, vorzugsweise 1 bis 5 Gew.-%, aufweisen.

**3.** Verfahren nach einem der vorhergehenden Ansprüche, dadurch gekennzeichnet, daß die bei den fluorierten Polyurethane mit Hydroxy-Funktionalität das Verhältnis von NCO-Äquivalenten zu den gesamten OH-Äquivalenten von 0,001 bis 1 beträgt.

**4.** Verfahren nach einem der vorhergehenden Ansprüche, dadurch gekennzeichnet, daß das Diisocyanat ausgewählt wird aus Verbindungen mit der allgemeinen Formel (I):

$OCN-R_1-NCO$ (I)

worin $R_1$ eine Alkylen-, Cycloalkylen-, Alkylen-cycloalkylen- oder Arylengruppe mit 1 bis 20 Kohlenstoffatomen bedeutet.

**5.** Verfahren nach einem der vorhergehenden Ansprüche, dadurch gekennzeichnet, daß die (Per)-fluorpolyether mit Hydroxyendgruppen Fluorpolyoxyalkylenether mit einem durchschnittlichen Molekulargewicht von 400 bis 7000 sind mit der allgemeinen Formel (II):

$HO-R_f-OH$ (II)

worin $R_f$ ausgewählt wird aus

$-R-CF_2-O-(C_2F_4O)_m(CF_2O)_n-CF_2-R-$

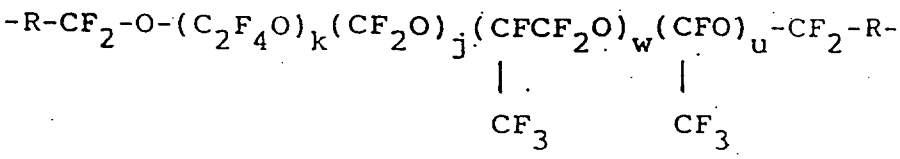

$-R-CF_2-O-(C_3F_6O)_d-CF_2-R-$
$-R-CF_2-(OC_2F_4CH_2)_b-OR'_fO-(CH_2C_2F_4O)_b-CF_2-R-$
$-R-CF_2-O-(C_2F_4O)_r-CF_2-R-$

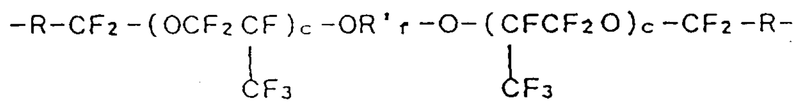

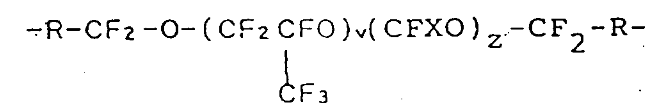

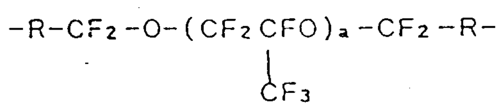

$-R-CF_2-(O-CF_2CF_2CH_2)_g-O-CF_2-R-$

worin:

R ausgewählt wird aus
$-(CH_2)_x-$;
$-[(CH_2O)_yCH_2]-$, und
$-(CH_2)_x-OCH_2-$,

wobei

| | |
|---|---|
| x und y | ganze Zahlen von 1 bis 4 sind; |
| m und n | ganze Zahlen mit einem Verhältnis von m/n von 0,2 bis 2, vorzugsweise von 0,5 bis 1,2 sind; |
| $R'_f$ | ein Perfluoralkylen-Radikal ist; |
| X | F oder $CF_3$ ist; |
| k, j, w, u, d, b, r, c, v, z, a und g | solche ganze Zahlen bedeuten, daß die Molekulargewichte innerhalb des angegebenen Bereichs liegen. |

6. Verfahren nach einem der vorhergehenden Ansprüche, dadurch gekennzeichnet, daß die fluorierten Polyurethane ein durchschnittliches Molekulargewicht von wenigstens 1000, vorzugsweise von 2000 bis 5000, eine Hydroxy-Funktionalität von wenigstens 2, vorzugsweise von 2 bis 6, und einen Fluorgehalt von wenigstens 30 Gew.-%, vorzugsweise von 35 bis 50 Gew.-%, aufweisen.

**Revendications**

**Revendications pour les Etats contractants suivants : AT, BE, CH, DE, DK, FR, GB, GR, LI, NL, SE**

1. Utilisation de polyuréthannes fluorés comportant une fonctionnalité hydroxy qui peuvent être obtenus par la réaction d'au moins un diisocyanate organique avec au moins un (per)fluoropolyéther présentant des groupes hydroxy et par réaction du produit résultant avec un polyol comportant une fonctionnalité d'au moins 2, et dans lesquels le rapport des équivalents des groupes isocyanates sur le total des groupes hydroxy n'est pas supérieur à 1,
en tant qu'agents protecteurs dans le traitement des matériaux en pierre.

2. L'utilisation de polyuréthannes fluorés comportant une fonctionnalité hydroxy selon la revendication 1, caractérisée en ce que le rapport d'équivalents NCO sur le total d'équivalents OH est compris entre 0,001 et 1.

3. Utilisation de polyuréthannes fluorés comportant une fonctionnalité hydroxy selon l'une quelconque des revendications 1 et 2, caractérisée en ce que le diisocyanate est sélectionné parmi les composés représentés par la formule générale (I):

$OCN-R_1-NCO$ (I)

dans laquelle:

$R_1$ représente un radical alkylène, cycloalkylène, alkylène-cycloalkylène ou arylène et contient de 1 à 20 atomes de carbone.

4. Utilisation de polyuréthannes fluorés comportant une fonctionnalité hydroxy selon l'une quelconque des revendications précédentes, caractérisée en ce que les (per)fluoropolyéthers présentant des groupes hydroxy sont des fluoropolyoxyalkylène-éthers présentant un poids moléculaire moyen de 400 à 7000 et représentés par la formule générale (II):

$HO-R_f-OH$ (II)

dans laquelle:
$R_f$ est sélectionné parmi:

$-R-CF_2-O-(C_2F_4O)_m-(CF_2O)_n-CF_2-R-$

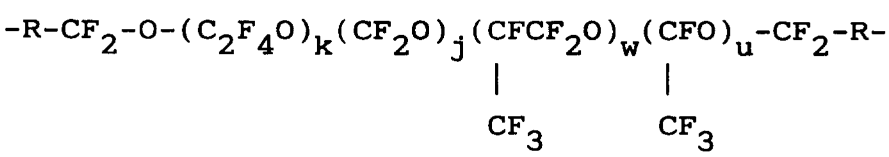

$-R-CF_2-O-(C_3F_6O)_d-CF_2-R-$
$-R-CF_2-(OC_2F_4CH_2)_b-OR'_fO-(CH_2C_2F_4O)_b-CF_2-R-$
$-R-CF_2-O-(C_2F_4O)_r-CF_2-R-$

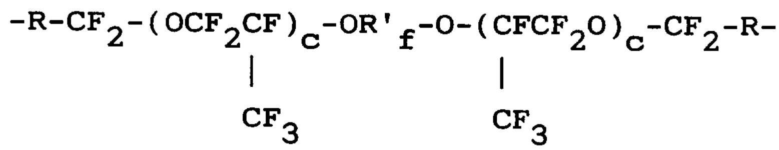

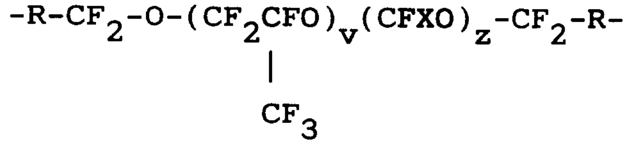

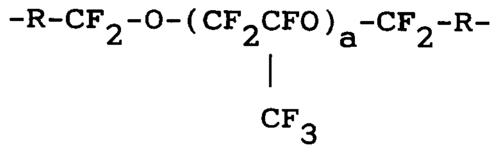

$-R-CF_2-(O-CF_2CF_2CH_2)_g-O-CF_2-R-$

dans lesquels:

| | |
|---|---|
| R | est sélectionné parmi: |
| | $-(CH_2)_x-$; |
| | $-[(CH_2O)_yCH_2]-$, et |
| | $-(CH_2)_x-OCH_2-$, |
| x et y | étant des nombres entiers de 1 à 4; |
| m et n | étant des nombres entiers, le rapport m sur n étant compris dans un intervalle allant de 0,2 à 2, et de préférence de 0,5 à 1,2; |
| $R'_f$ | représente un radical perfluoroalkylène; |
| X | représente F ou $CF_3$; |
| k, j, w, u, d, b, r, c, v, z, a et g | sont des nombres entiers tels que les poids moléculaires résultants sont compris dans l'intervalle indiqué. |

**5.** L'utilisation de polyuréthannes fluorés comportant une fonctionnalité hydroxy selon l'une quelconque des revendications précédentes, lesdits polyuréthannes fluorés présentant un poids moléculaire moyen de 1000, de préférence de 2000 à 5000, une fonctionnalité hydroxy d'au moins 2, de préférence de 2 à 6 et une teneur en fluor d'au moins 30% en poids, de préférence de 35 à 50% en poids.

**6.** L'utilisation de polyuréthannes fluorés comportant une fonctionnalité hydroxy selon l'une quelconque des revendications précédentes, caractérisée en ce que les polyuréthannes sont utilisés sous une forme dissoute à une concentration de 1 à 20% en poids, de préférence de 1 à 5% en poids.

**Revendications pour l'Etat contractant suivant : ES**

**1.** Un procédé de protection des matériaux en pierre, caractérisé en ce que ces matériaux sont traités par des solutions de polyuréthanes fluorés comportant une fonctionnalité hydroxy, qui peuvent être obtenus par la réaction d'au moins un diisocyanate organique avec au moins un (per)fluoropolyéther présentant des groupes hydroxy et par réaction du produit résultant avec un polyol comportant une fonctionnalité d'au moins 2, et dans lesquels le rapport des équivalents des groupes isocyanates sur le total des groupes hydroxy n'est pas supérieur à 1.

**2.** Le procédé selon la revendication 1, caractérisé en ce que les solutions de polyuréthanes fluorés comportant une fonctionnalité hydroxy ont des concentrations de 1 à 20% en poids, de préférence de 1 à 5% en poids.

**3.** Le procédé selon l'une quelconque des revendications précédentes, caractérisé en ce que dans les polyuréthanes fluorés comportant une fonctionnalité hydroxy, le rapport des équivalents NCO sur le total d'équivalents OH est compris entre 0,001 et 1.

**4.** Le procédé selon l'une quelconque des revendications précédentes, caractérisé en ce que le diisocyanate est sélectionné parmi les composés représentés par la formule générale (I):

OCN-$R_1$-NCO (I)

dans laquelle:

$R_1$ représente un radical alkylène, cycloalkylène, alkylène-cycloalkylène ou arylène et contient de 1 à 20 atomes de carbone.

**5.** Le procédé selon l'une quelconque des revendications précédentes, caractérisé en ce que les (per)-fluoropolyéthers présentant des groupes hydroxy sont des fluoropolyoxyalkylène-éthers présentant un poids moléculaire moyen de 400 à 7000 et représentés par la formule générale (II):

HO-$R_f$-OH (II)

dans laquelle:

$R_f$ est sélectionné parmi:

$-R-CF_2-O-(C_2F_4O)_m-(CF_2O)_n-CF_2-R-$

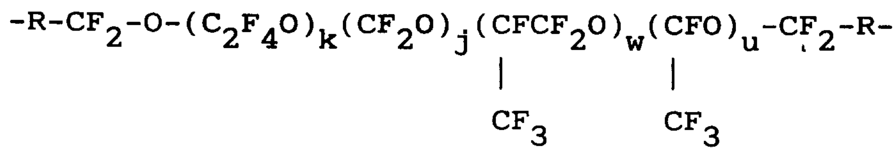

$-R-CF_2-O-(C_3F_6O)_d-CF_2-R-$

$-R-CF_2-(OC_2F_4CH_2)_b-OR'_fO-(CH_2C_2F_4O)_b-CF_2-R-$

$-R-CF_2-O-(C_2F_4O)_r-CF_2-R-$

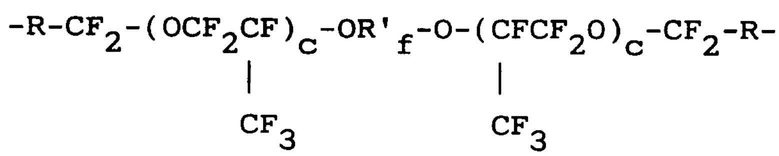

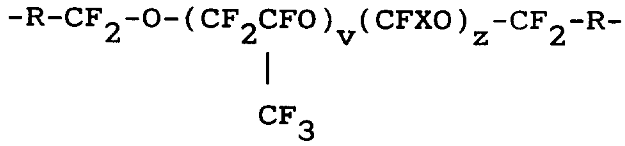

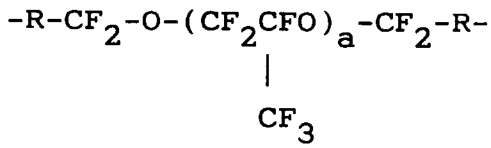

$-R-CF_2-(O-CF_2CF_2CH_2)_g-O-CF_2-R-$

dans lesquels:

- R est sélectionné parmi:
  - $-(CH_2)_x-$;
  - $-[(CH_2O)_yCH_2]-$, et
  - $-(CH_2)_x-OCH_2-$,
- x et y étant des nombres entiers de 1 à 4;
- m et n étant des nombres entiers, le rapport m/n étant compris dans un intervalle allant de 0,2 à 2, et de préférence de 0,5 à 1,2;
- $R'_f$ représente un radical perfluoroalkylène;
- X représente F ou $CF_3$;
- k, j, w, u, d, b, r, c, v, z, a et g sont des nombres entiers tels que les poids moléculaires résultants sont compris dans l'intervalle indiqué.

6. Le procédé selon l'une quelconque des revendications précédentes, caractérisé en ce que les polyuréthanes fluorés ont un poids moléculaire moyen d'au moins 1000, de préférence de 2000 à 5000, une fonctionnalité hydroxy d'au moins 2, de préférence de 2 à 6, et une teneur en fluor d'au moins 30% en poids, de préférence de 35 à 50% en poids.